# EUROPÄISCHE PATENTSCHRIFT

(11) **EP 0 823 364 B1**
(45) Veröffentlichungstag und Bekanntmachung des Hinweises auf die Patenterteilung: **01.08.2001**
(21) Anmeldenummer: 97109471.9
(22) Anmeldetag: 11.06.1997
(51) Int. Cl.: B62D 25/20

(54) **Bodengruppe für Kraftfahrzeuge, insbesondere Personenkraftwagen**
Underbody for motor vehicles, particularly for passenger cars
Plancher d'un véhicule à moteur, notamment voiture particulière

(30) Priorität: 30.07.1996 DE 19630646
(43) Veröffentlichungstag der Anmeldung: 11.02.1998
(73) Patentinhaber: Dr.Ing.h.c. F. Porsche Aktiengesellschaft, 70435 Stuttgart (DE)
(72) Erfinder: Vlahovic, Josip, 74321 Bietigheim-Bissingen (DE)

(56) Entgegenhaltungen:
- EP-A- 0 067 602
- EP-A- 0 650 860
- DE-C- 934 628
- US-A- 5 002 333

## Beschreibung

Die Erfindung betrifft eine Bodengruppe für Kraftfahrzeuge, insbesondere Personenkraftwagen, wie sie beispielsweise bereits aus der US 5,002,333 bekannt ist. Hier wird eine Bodengruppe beschrieben, bei welcher sich zwischen den außenliegenden Längsträgern und dem Mitteltunnel ein doppelwandiger Boden erstreckt, welcher örtlich angeordnete Versteifungen enthält.

Die DE-PS 934 628 offenbart eine Bodengruppe für Kraftfahrzeuge, insbesondere Personenkraftwagen, wobei sich sowohl auf der Fahrer- als auch auf der Beifahrerseite zwischen einem seitlich außenliegenden Längsträger und einem Mitteltunnel ein doppelwandiger Boden mit örtlich angeordneten längsverlaufenden Versteifungen erstreckt. Die Längsträger, der Mitteltunnel und der doppelwandige Boden mit den Versteifungen werden durch eine Vielzahl von Blechpreßteilen gebildet.

Diesen bekannten Anordnungen haftet der Nachteil an, daß durch den vielteiligen Aufbau hohe Fertigungs- und Montagekosten für die Bodengruppe entstehen, da eine Vielzahl von Blechpreßwerkzeugen erforderlich und umfangreiche Schweißarbeiten durchzuführen sind.

Aufgabe der Erfindung ist es, eine Bodengruppe der eingangs genannten Gattung so weiterzubilden, daß der Aufwand für Fertigung und Montage deutlich reduziert werden kann.

Erfindungsgemäß wird diese Aufgabe durch die kennzeichnenden Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung des doppelwandigen Bodens durch im Innenhochdruckumformverfahren hergestellte Hohlkörper die Anzahl der Bauteile und der Fügeverfahren wesentlich verringert wird.

Auf zusätzliche Versteifungsteile kann verzichtet werden, da die Versteifungen durch bereichsweise aneinandergeführte gegenüberliegende Wandabschnitte des jeweiligen Hohlkörpers gebildet werden. Vorzugsweise werden auch die seitlich außenliegenden Längsträger und/oder der Mitteltunnel und/oder ein stirnwandseitiger unterer Querträger durch innenhochdruckumgeformte Bauteile gebildet. Dadurch wird die Anzahl der Einzelteile drastisch reduziert und somit auch die Werkzeugkosten gesenkt. Die erforderlichen Schweißverbindungen können von einem Schweißroboter getätigt werden.

Ein Ausführungsbeispiel der Erfindung ist in den Zeichnungen dargestellt und wird im folgenden näher erläutert.

Es zeigen
- Fig. 1: eine Teildraufsicht auf eine erste Ausführungsform einer Bodengruppe eines Personenwagens,
- Fig. 2: eine perspektivische Darstellung der Verbindung Boden - seitlicher Längsträger,
- Fig. 3: einen Schnitt nach der Linie III-III der Fig. 1 in größerer Darstellung und um 90° gedreht,
- Fig. 4: einen Schnitt entsprechend Fig. 3, wobei eine andere Fügeverbindung zwischen Boden und Schweller vorgesehen ist,
- Fig. 5: einen Schnitt entsprechend Fig. 3 einer weiteren Verbindungsvariante zwischen Boden und Schweller,
- Fig. 6: eine perspektivische Darstellung einer zweiten Ausführungsform einer Bodengruppe eines Personenkraftwagens,
- Fig. 7: einen Schnitt nach der Linie V-V der Fig. 4 und
- Fig. 8: eine Teildraufsicht auf eine zweite Ausführungsform der Bodengruppe.

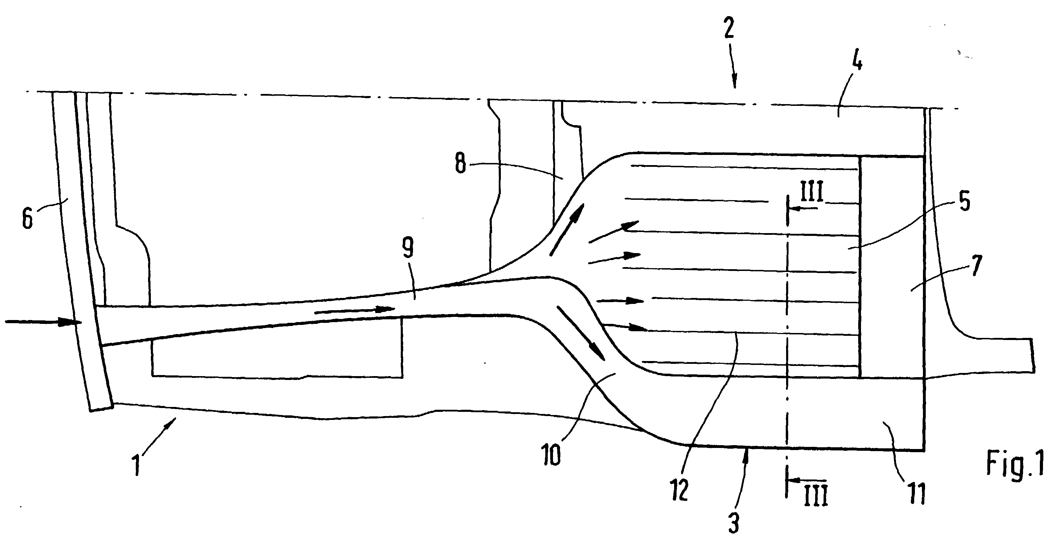

In Fig. 1 ist ein Teilbereich eines durch einen Personenkraftwagen 1 gebildeten Kraftfahrzeuges dargestellt, dessen Bodengruppe 2 sich im wesentlichen aus seitlich außenliegenden Längsträgern 3, einem Mitteltunnel 4 und einem doppelwandigen Boden 5 zusammensetzt.

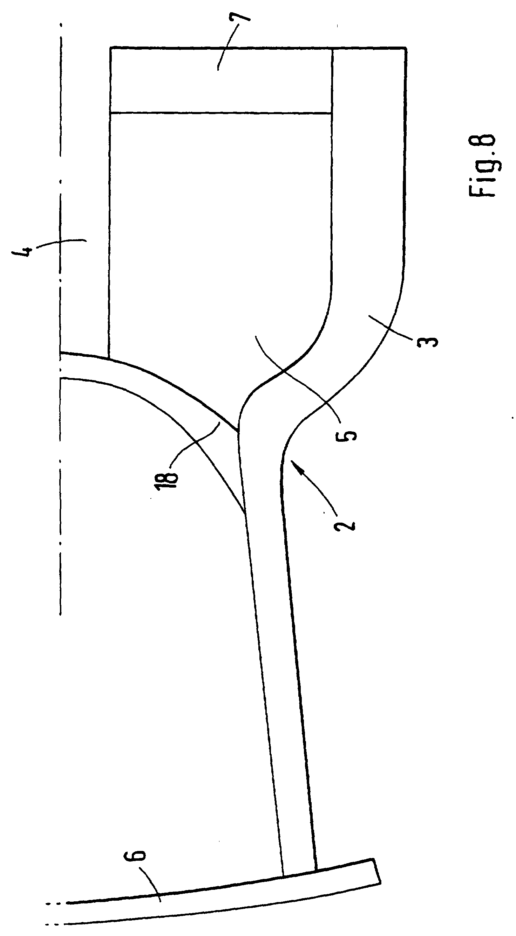

Gemäß den Fig. 1 und 8 erstrecken sich die beiden seitlich außenliegenden Längsträger 3 einstückig über die gesamte Längserstreckung des Fahrzeuges und werden durch Innenhochdruckumformen eines rohrförmigen Rohlings hergestellt. Die Längsträger 3 weisen entlang ihrer Längserstreckung - den auftretenden Belastungen angepaßt - unterschiedliche Querschnitte auf. Der Längsträger 3 kann jedoch auch mehrteilig ausgebildet sein, wobei die einzelnen Abschnitte (z.B. Längsträger vorn, Schweller, Längsträger hinten) beispielsweise durch Strangpreßprofilteile oder Hydroformteile gebildet werden können.

In Fig. 1 ist nur der vordere Abschnitt der Längsträger 3 dargestellt und zwar von einem vorderen Querträger 6 bis zu einem Sitzquerträger 7. Im Bereich einer Stirnwand 8 geht ein vorderer Längsträgerabschnitt 9 über eine nach außen und unten gerichtete Abkröpfung 10 in einen seitlich außenliegenden Schwellerabschnitt 11 über.

Der Mitteltunnel 4 wird durch ein oder mehrere Strangpreßprofilteile oder ebenfalls ein durch Innenhochdruckumformen gebildetes Bauteil (Hydroformteil) gebildet und endet mit seinem vorderen Ende, etwa im Bereich der aufrechten Stirnwand 8.

Erfindungsgemäß wird der doppelwandige Boden 5 auf der Fahrer- und Beifahrerseite durch je einen im Innenhochdruckumformverfahren hergestellten Hohlkörper 12 gebildet, der an die seitlich außenliegenden Längsträger 3 und den Mitteltunnel 4 angeschlossen und fest mit diesem verbunden ist.

Örtliche Versteifungen 13 des doppelwandigen Bodens 5 werden durch bereichsweise aneinandergeführte gegenüberliegende Wandabschnitte 14, 15 des jeweiligen Hohlkörpers 12 gebildet.

Im Anlagebereich von aneinandergeführten Wandabschnitten 14, 15 können diese zusätzlich durch Kleben, Schweißen, Nieten oder dergleichen miteinander verbunden sein.

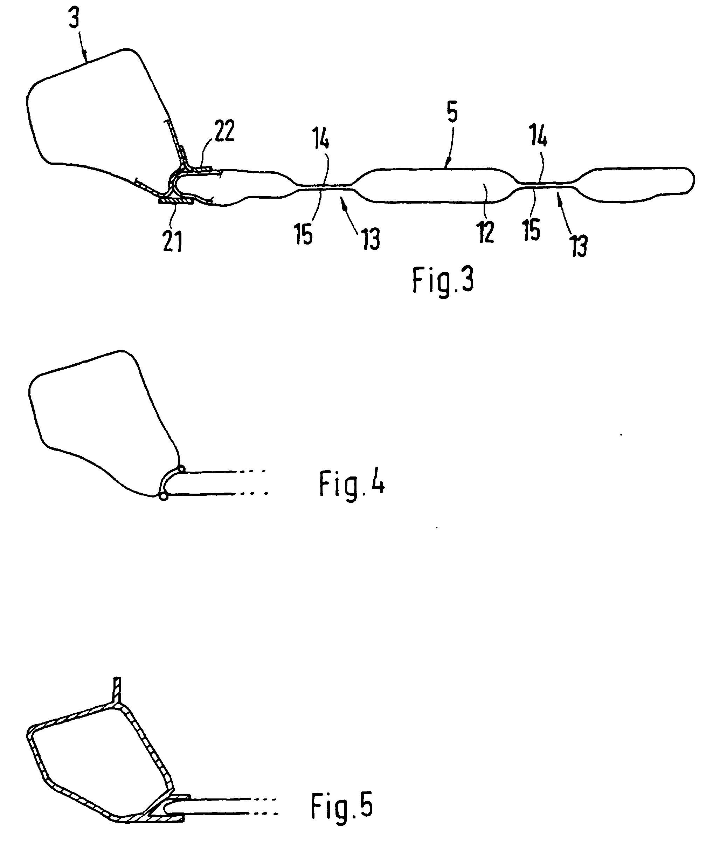

Jeder Hohlkörper 12 weist im Bereich der Stirnwand 8 einen schräg nach oben verlaufenden doppelwandigen Abschnitt 16 auf. Gemäß Fig. 4 ist ein vorderes offenes Ende 17 des Hohlkörpers 12 an einen unteren Querträger 18 herangeführt und mit diesem fest verbunden (z.B. durch Schweißen). Der untere Querträger 18 verbindet die beiden seitlich außenliegenden Längsträger 3 und ist ferner an den Mitteltunnel 4 angeschlossen. Ferner ist ein unterer Randbereich der Stirnwand 8 an den Querträger 18 angeschlossen.

Im Bereich der Abkröpfung 10 des Längsträgers ist der plattenförmige Hohlkörper 12 seitlich entsprechend der Form der Abkröpfung 10 beschnitten.

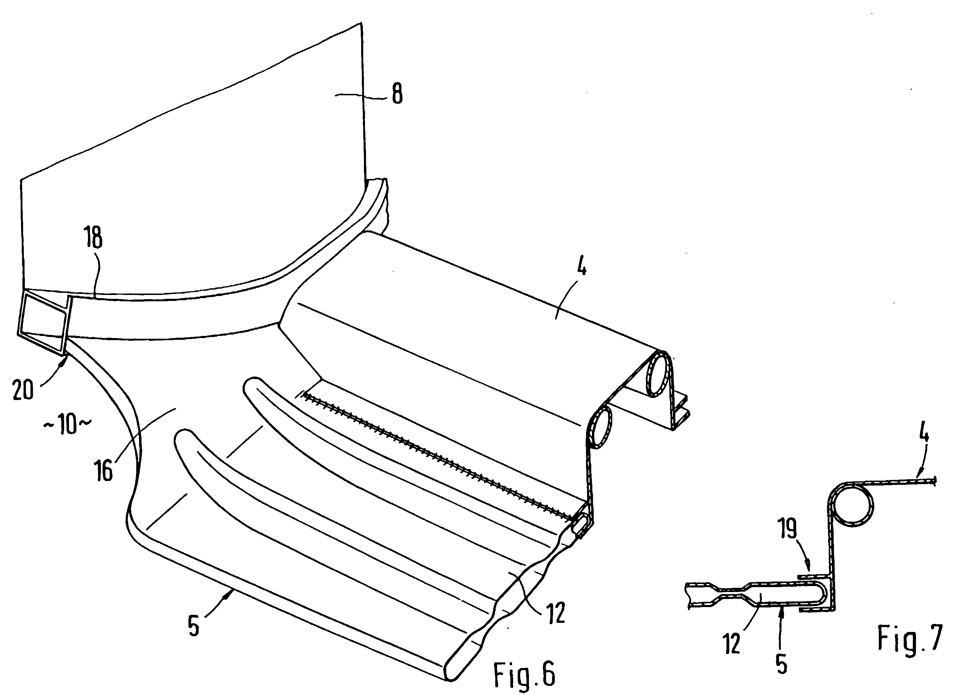

Gemäß Fig. 5 sind seitlich am Mitteltunnel 4 und am Querträger 18 Aufnahmeabschnitte 19, 20 für den Randbereich des den Boden 5 bildenden Hohlkörpers 12 angeformt. Ferner können am Querträger 18 angeformte Flansche vorgesehen sein (Fig. 6).

Die Versteifungen 13, die sich im Ausführungsbeispiel in Längsrichtung des Fahrzeuges erstrecken, werden durch mechanisches Quetschen nach oder beim Innenhochdruckumformen des Hohlkörpers 12 gefertigt.

Ausgangsteils für die großflächigen innenhochdruckumgeformten Bauteile (z.B. Boden, Tunnel) ist ein rohrförmiger oder profilierter Rohling aus Stahl oder Leichtmetall, der eine geringe Wanddicke und einen großen Durchmesser bzw. Umfang aufweist.

Bei rohrförmigen Rohlingen beträgt das Verhältnis Durchmesser : Wanddicke D/s > 150 und vorzugsweise mehr als 200, wobei Wanddicke zwischen 1 und 2 mm und Außendurchmesser größer als 250 mm verwendet werden. Bei nichtrohrförmigen Rohlingen beträgt das Verhältnis Umfang : Wanddicke mehr als 400. Der Rohling wird in einem Vorformwerkzeug von außen mechanisch umgeformt, wobei der innere Hohlraum mit Wasser gefüllt ist. Nach dem Vorformen wird das Bauteil durch Aufbringen eines inneren Druckes (IHV-Technologie) in den gewünschten Endquerschnitt gebracht.

Gemäß Fig. 3 kann das äußere Ende des Hohlkörpers 12 über zusätzliche streifenförmige Blechteile 21, 22 mit dem Längsträger 3 verschweißt werden (z.B. Widerstandsschweißung, Rollnahtschweißung, Laserschweißung). Diese Art der Verbindung benötigt wesentlich weniger Energie als die in Fig. 4 dargestellten MIG- oder WIG-Schweißnähte.

Der Hohlkörper 12 kann sich von der Stirnwand 8 bis zum Sitzquerträger 7 oder bis zu einem weiteren hintenliegenden, nicht näher dargestellten Fersenblech des Aufbaus erstrecken.

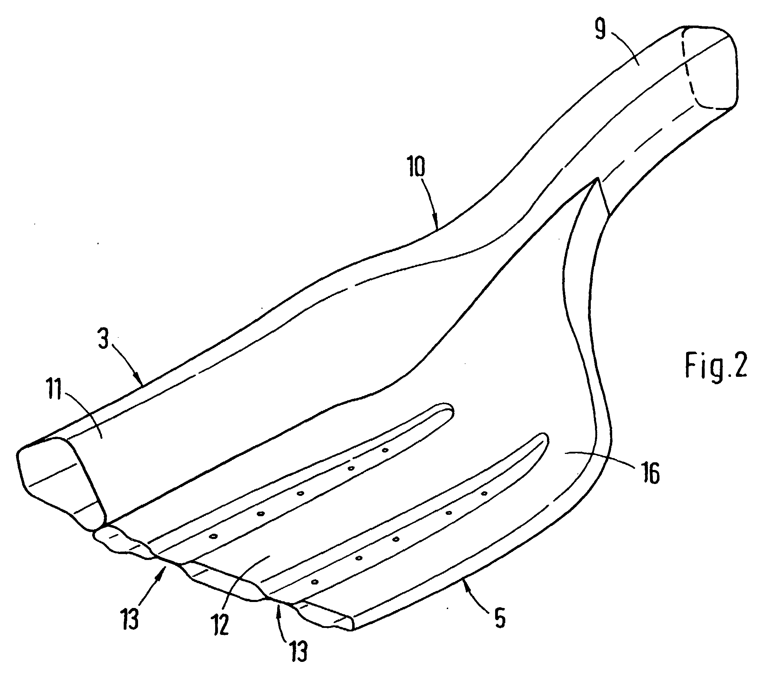

Gemäß den Fig. 1 und 2 ist der Hohlkörper 12 nur im horizonzal ausgerichteten Bodenbereich plattenförmig ausgebildet. Der dem Mitteltunnel 4 zugekehrte Rand 23 des Hohlkörpers 12 verwindet sich benachbart der Stirnwand 8 nach außen bzw. oben hin und ist an den seitlichen Längsträger 3 angeschlossen (seitlich innen und eventuell auch unten).

In Fig. 2 ist ersichtlich, daß die Höhe des Hohlkörpers im endseitigen Anbindungsbereich an den Längsträger wesentlich Größer ist als im horizontal verlaufenden Bodenbereich.

Bei der Ausführungsform entsprechend Fig. 6 bleibt die Höhe der Höhe des Hohlkörpers entlang der gesamten Längserstreckung nahezu konstant oder nimmt zum Querträger 18 hin geringfügig zu.

## Patentansprüche

1. Bodengruppe für Kraftfahrzeuge, insbesondere Personenkraftwagen, wobei sich zwischen seitlich außenliegenden Längsträgern und einem Mitteltunnel ein doppelwandiger Boden mit örtlich angeordneten Versteifungen erstreckt, wobei der doppelwandige Boden (5) auf der Fahrer- und Beifahrerseite durch je zumindest einen Hohlträger (12) gebildet wird, der an den seitlich außenliegenden Längsträger (3) und den Mitteltunnel (4) angeschlossen und mit diesen fest verbunden ist, dadurch gekennzeichnet, daß der Hohlträger im Innenhochdruckumformverfahren hergestellt ist und daß die Versteifungen (13) durch bereichsweise aneinandergeführte, gegenüberliegende Wandabschnitte (14, 15) des jeweiligen Hohlkörpers (12) gebildet werden.

2. Bodengruppe nach Anspruch 1, dadurch gekennzeichnet, daß jeder Hohlkörper (12) im Bereich einer Stirnwand (8) einen hochgezogenen, schräg verlaufenden Abschnitt (16) aufweist.

3. Bodengruppe nach den Ansprüchen 1 und 2, dadurch gekennzeichnet, daß ein vorderes offenes Ende (17) des Hohlkörpers (12) an einen unteren Querträger (18) angeschlossen ist.

4. Bodengruppe nach Anspruch 3, dadurch gekennzeichnet, daß der untere Querträger (18) an die beiden seitlich außenliegenden Längsträger (3) und den Mitteltunnel (4) angeschlossen ist und daß vom Querträger (18) eine aufrechte Stirnwand (8) weggeführt ist.

5. Bodengruppe nach einem oder mehreren der vorangegangenen Ansprüche, dadurch gekennzeichnet, daß die seitlich außenliegenden Längsträger (3) jeweils durch einstückige, im Innenhochdruckumformverfahren gefertigte Hohlträger gebildet werden.

6. Bodengruppe nach einem oder mehreren der vorangegangenen Ansprüche, dadurch gekennzeichnet, daß der Mitteltunnel (4) durch ein Strangpreßprofilteil oder ein im Innenhochdruckumformverfahren hergestelltes Bauteil gebildet wird.

7. Bodengruppe nach einem oder mehreren der vorangegangenen Ansprüche, dadurch gekennzeichnet, daß am Mitteltunnel (4) und/oder an den Längsträgern (3) und/oder am Querträger (18) Aufnahmeabschnitte (19, 20) für den angrenzenden Hohlkörper (12) ausgebildet sind.

8. Bodengruppe nach einem oder mehreren der vorangegangenen Ansprüche, dadurch gekennzeichnet, daß sich der dem Mitteltunnel (4) zugekehrte Rand des Hohlkörpers (12) benachbart der Stirnwand (8) nach außen bzw. oben hin verwindet und an den seitlichen Längsträger (3) angeschlossen ist.

9. Bodengruppe nach Anspruch 1, dadurch gekennzeichnet, daß die Versteifungen (13) durch mechanisches Quetschen von Windabschnitten (14, 15) des Hohlkörpers (12) nach oder beim Innenhochdruckumformen gebildet werden.

10. Bodengruppe nach den Ansprüchen 1 und 9, dadurch gekennzeichnet, daß die gegenüberliegenden Wandabschnitte (14, 15) im Bereich der Versteifungen (13) zusätzlich miteinander verbunden sind.

## Claims

1. A floor assembly for motor vehicles, in particular passenger cars, wherein a double-walled floor with reinforcements arranged locally extends between longitudinal members situated laterally on the outside and a central tunnel, and wherein the double-walled floor (5) is formed on the driver's and passenger's side by at least one respective hollow support (12) which is attached to the longitudinal member (3) situated laterally on the outside and the central tunnel (4) and is firmly connected thereto, **characterized in that** the hollow support is produced in the internal high-pressure shaping process, and the reinforcements (13) are formed by locally adjacent, opposed wall portions (14, 15) of the respective hollow member (12).

2. A floor assembly according to Claim 1, **characterized in that** each hollow member (12) has a raised, obliquely extending portion (16) in the region of an end wall (8).

3. A floor assembly according to Claims 1 and 2, **characterized in that** an open front end (17) of the hollow member (12) adjoins a lower transverse support (18).

4. A floor assembly according to Claim 3, **characterized in that** the lower transverse support (18) adjoins the two longitudinal members (3) situated laterally on the outside and the central tunnel (4), and an upright end wall (8) extends away from the transverse support (18).

5. A floor assembly according to one or more of the preceding Claims, **characterized in that** the longitudinal members (3) situated laterally on the outside are each formed by one-piece hollow supports produced in the internal high-pressure shaping process.

6. A floor assembly according to one or more of the preceding Claims, **characterized in that** the central tunnel (4) is formed by an extruded section or a component produced in the internal high-pressure shaping process.

7. A floor assembly according to one or more of the preceding Claims, **characterized in that** receiving portions (19, 20) for the adjacent hollow member (12) are formed on the central tunnel (4) and/or on the longitudinal members (3) and/or on the transverse support (18).

8. A floor assembly according to one or more of the preceding Claims, **characterized in that** the edge of the hollow member (12) facing the central tunnel (4) and adjacent to the end wall (8) twists outwards and upwards and adjoins the lateral longitudinal member (3).

9. A floor assembly according to Claim 1, **characterized in that** the reinforcements (13) are formed by mechanical squeezing of wall portions (14, 15) of the hollow member (12) after or during the internal high-pressure shaping.

10. A floor assembly according to Claims 1 and 9, **characterized in that** the opposed wall portions (14, 15) are additionally joined to one another in the region of the reinforcements (13).

## Revendications

1. Bloc plancher pour véhicules automobiles, en particulier pour voitures de tourisme, un plancher à double paroi avec des raidisseurs disposés par endroits s'étendant entre des longerons situés sur les côtés extérieurs et un tunnel central, le plancher (5) à double paroi étant formé sur le côté du conducteur et du passager par au moins une poutre creuse (12) qui est raccordée au longeron (3) situé sur le côté extérieur et au tunnel central (4) et est solidaire de ceux-ci, caractérisé en ce que la poutre creuse est fabriquée par procédé de formage sous haute pression interne et en ce que les raidisseurs (13) sont formés par des portions de paroi (14, 15) du corps creux (12) correspondant, qui sont rapprochées par endroits et qui se font face.

2. Bloc plancher selon la revendication 1, caractérisé en ce que chaque corps creux (12) présente, dans la zone d'une paroi frontale (8), une portion (16) relevée qui s'étend obliquement.

3. Bloc plancher selon les revendications 1 et 2, caractérisé en ce qu'une extrémité ouverte avant (17) du corps creux (12) est raccordée à une traverse inférieure (18).

4. Bloc plancher selon la revendication 3, caractérisé en ce que la traverse inférieure (18) est raccordée aux deux longerons (3) situés sur les côtés extérieurs et au tunnel central (4), et en ce qu'une paroi frontale verticale (8) part de la traverse (18).

5. Bloc plancher selon une ou plusieurs des revendications précédentes, caractérisé en ce que les longerons (3) situés sur les côtés extérieurs sont formés chacun par des poutres creuses d'une seule pièce, obtenues par un procédé de formage sous haute pression interne.

6. Bloc plancher selon une ou plusieurs des revendications précédentes, caractérisé en ce que le tunnel central (4) est formé par un profilé extrudé ou par un composant obtenu par un procédé de formage sous haute pression interne.

7. Bloc plancher selon une ou plusieurs des revendications précédentes, caractérisé en ce que des portions de réception (19, 20) pour le corps creux (12) adjacent sont formées sur le tunnel central (4) et/ou sur les longerons (3) et/ou sur la traverse (18).

8. Bloc plancher selon une ou plusieurs des revendications précédentes, caractérisé en ce que le bord du corps creux (12), tourné vers le tunnel central (4), est tordu vers l'extérieur ou vers le haut, au voisinage de la paroi frontale (8) et est raccordé aux longerons latéraux (3).

9. Bloc plancher selon la revendication 1, caractérisé en ce que les raidisseurs (13) sont formés par écrasement mécanique de portions de paroi (14, 15) du corps creux (12), après ou pendant le formage sous haute pression interne.

10. Bloc plancher selon les revendications 1 et 9, caractérisé en ce que les portions de paroi (14, 15) qui se font face sont de plus reliées entre elles dans la zone des raidisseurs (13).
